# EUROPÄISCHE PATENTSCHRIFT

(11) **EP 3 431 249 B1**
(45) Veröffentlichungstag und Bekanntmachung des Hinweises auf die Patenterteilung: **26.08.2020**
(21) Anmeldenummer: 18178409.1
(22) Anmeldetag: 19.06.2018
(51) Int. Cl.: B29C 45/73

(54) **HEIZVORRICHTUNG, PERIPHERIEGERÄT UND VERFAHREN ZUR STEUERUNG EINES SOLCHEN PERIPHERIEGERÄTS**
HEATING DEVICE, PERIPHERAL DEVICE AND METHOD FOR CONTROLLING SUCH A PERIPHERAL DEVICE
DISPOSITIF DE CHAUFFAGE, APPAREIL PÉRIPHÉRIQUE ET PROCÉDÉ DE COMMANDE D'UN TEL APPAREIL PÉRIPHÉRIQUE

(30) Priorität: 18.07.2017 DE 102017116125
(43) Veröffentlichungstag der Anmeldung: 23.01.2019
(73) Patentinhaber: Varioplast Konrad Däbritz GmbH, 75443 Ötisheim (DE)
(72) Erfinder: Däbritz, Michael, 75417 Mühlacker (DE)
(74) Vertreter: Schön, Thilo

(56) Entgegenhaltungen:
- DE-A1- 19 963 572
- DE-A1-102010 014 992
- DE-A1-102013 014 313
- JP-A- H09 248 832

## Beschreibung

### Beschreibung

Die Erfindung betrifft eine Heizvorrichtung zur Erwärmung wenigstens eines Teils der Oberfläche wenigstens einer Werkzeughälfte eines Spritzgusswerkzeugs nach dem Oberbegriff des Anspruchs 1, ein Peripheriegerät für eine Spritzgussmaschine nach Anspruch 10 sowie ein Verfahren zur Steuerung eines solchen Peripheriegeräts nach Anspruch 13.

Aus der gattungsbildenden DE 10 2013 014 313 A1 ist das Konzept bekannt, zur Verbesserung der Qualität der mit einer Kunststoff-Spritzgussmaschine hergestellten Spritzlinge wenigstens einen Teil der Oberfläche einer Werkzeughälfte des Spritzgusswerkzeugs bei geöffnetem Werkzeug mittels eines durch eine Heizvorrichtung erzeugten Heißluftstromes vorzuheizen, wobei dieser Heißluftstrom ein Teil seiner Wärmeenergie an das Werkzeug abgibt. Zur Erzielung einer schnellen Aufheizung und einer hohen Energieeffizienz wird es insbesondere vorgeschlagen, den Luftstrom zumindest teilweise in einen Kreislauf zu führen, wozu eine Warmluft-Rückführeinrichtung vorgesehen ist und wozu weiterhin eine Glocke genutzt wird. Dieses Konzept hat sich in der Praxis als sehr gut funktionierend herausgestellt.

Der Einsatz einer Strahlpumpe in einem Heizungskreislauf ist aus der DE 10 2010 014 992 A1 grundsätzlich bekannt.

Hiervon ausgehend stellt sich die vorliegende Erfindung die Aufgabe, eine gattungsgemäße Heizvorrichtung dahingehend weiterzubilden, dass ihre Praxistauglichkeit weiter erhöht wird, insbesondere dahingehend, dass sie sehr wartungsarm arbeitet. Weiterhin soll die Erzielung einer kompakten Bauform möglich sein.

Diese Aufgabe wird durch eine Heizvorrichtung mit den Merkmalen des Anspruchs 1 gelöst. Ein Peripheriegerät für eine Spritzgussmaschine, welches eine Heizvorrichtung aufweist, welche nach einem der Ansprüche 3, 4, 7-9 ausgebildet ist, ist in Anspruch 10 angegeben. Ein erfindungsgemäßes Verfahren zum Betreiben eines solchen Peripheriegerätes ist in Anspruch 13 angegeben. Wie bei der gattungsgemäßen Heizvorrichtung auch, wird zur Aufheizung des Werkzeugs genutzte Luft in einem Kreislauf geführt. Das heißt, es ist eine Warmluftrückführeinrichtung vorgesehen. Diese Warmluft-Rückführeinrichtung muss natürlich eine Umwälzeinrichtung aufweisen. Erfindungsgemäß ist diese Umwälzeinrichtung als Strahlpumpe - welche in der Regel nach dem Venturi-Prinzip arbeitet - ausgebildet. Als Treibstrahl kann gewöhnliche Pressluft verwendet werden. Hierzu kann Druckluft verwendet werden, welche in einer Produktionsumgebung zumeist ohnehin vorhanden ist. Dies bedeutet, dass die Strahlpumpe einen Druckgasanschluss aufweist. Wie man später sehen wird, kann die Warmluft-Rückführeinrichtung mit dieser Maßnahme sehr kompakt in Form eines Heizkopfes ausgeführt werden und kommt insbesondere ohne bewegliche Teile aus, wodurch sie trotz der hohen Temperaturen, welchen sie ausgesetzt ist, praktisch wartungsfrei arbeiten kann.

Wie im Stand der Technik auch, weist die Heizvorrichtung vorzugsweise eine Glocke auf, da sich somit eine sehr hohe Effizienz erzielen lässt.

Aufgrund der Tatsache, dass der Heizvorrichtung während des Betriebs permanent Luft zugeführt wird, ist es systembeding erforderlich, eine Entlüftung vorzusehen, was insbesondere durch Vorsehen einer Entlüftungsöffnung erfolgen kann. Dies führt zu einem beabsichtigten Verlust von Warmluft. Die Vorteile, die sich durch Gebrauch der erfindungsgemäßen Warmluft-Rückführeinrichtung ergeben, überwiegen diesen Verlust an Warmluft jedoch bei weitem.

Ein erfindungsgemäßes Peripheriegerät, welches eine solche Heizvorrichtung aufweist, weist außerhalb des Bereiches der Werkzeughälften ein vorzugsweise schlecht wärmeleitendes Element (beispielsweise in Form eines Schamottesteins) mit einer Anlagefläche auf, an welche die Glocke der Heizvorrichtung angelegt werden kann, wenn sie sich außerhalb der Werkzeughälften befindet. Hierdurch kann die Heizvorrichtung während des Spritzvorgangs auf Temperatur gehalten werden, wodurch einerseits eine hohe Energieeffizienz erreicht wird und andererseits eine kurze Zykluszeit erzielt werden kann. Hierbei ist es bevorzugt, dass die Heizleistung der Heizvorrichtung in dem Zustand, in welchem die Glocke an der Anlagefläche anliegt, geringer ist als in dem Zustand, in dem die Glocke an einer Oberfläche einer Werkzeughälfte anliegt. Hierbei ist es insbesondere bevorzugt, dass in dem Zustand, in welchem die Glocke an der Anlagefläche anliegt, sowohl die Menge der zugeführten Druckluft als auch die elektrische Heizleistung reduziert sind.

Bevorzugte Ausführungsbeispiele und weitere Vorteile ergeben sich aus den weiteren Unteransprüchen sowie aus den nun mit Bezug auf die Figuren näher beschriebenen Ausführungsbeispielen.

Die Erfindung wird nun anhand von Ausführungsbeispielen mit Bezug auf die Figuren näher beschrieben. Die Figuren zeigen:
- Figur 1: einen Heizkopf in einer perspektivischen Ansicht,
- Figur 2: den Heizkopf aus Figur 1 aus einem anderen Blickwinkel,
- Figur 3: das in Figur 2 Gezeigte, jedoch in einer teilweise geschnittenen Darstellung,
- Figur 4: den Heizkopf aus Figur 1 in einer Draufsicht aus Richtung R1 in Figur 1,
- Figur 5: den Heizkopf aus Figur 1 in einer Draufsicht aus Richtung R2 in Figur 1,
- Figur 6: den Heizkopf aus Figur 1 in einer Draufsicht aus Richtung R3 aus Figur 1,
- Figur 7: einen Schnitt entlang der Ebene A-A in Figur 4,
- Figur 8: einen Schnitt entlang der Ebene B-B in Figur 5,
- Figur 9: das Detail D1 aus Figur 8,
- Figur 10: das Detail D2 aus Figur 8,
- Figur 11: einen schematischen Querschnitt durch eine Spritzgussmaschine in einem ersten Betriebszustand,
- Figur 12: das in Figur 11 Gezeigte in einem Übergangszustand,
- Figur 13: das in den Figuren 11 und 12 Gezeigte in einem zweiten Betriebszustand,
- Figur 14: das in den Figuren 11 bis 13 Gezeigte in einem dritten Betriebszustand
- Figur 15: eine weitere Ausführungsform eines Peripheriegerätes wie es in den Figuren 11 bis 14 gezeigt ist,
- Figuren 16 - 20: verschiedene Varianten einer Glocken-Düseneinheit.

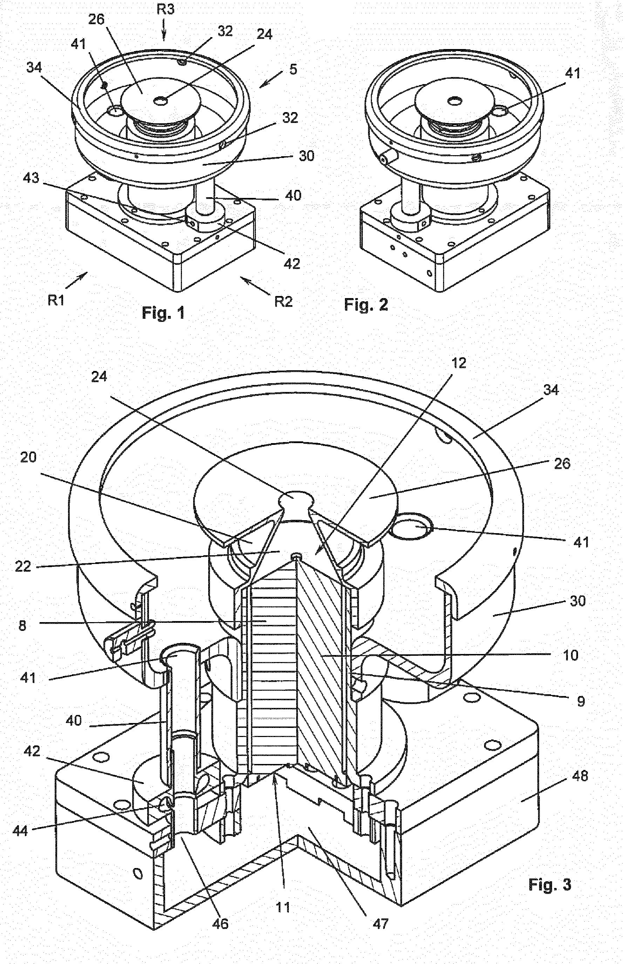

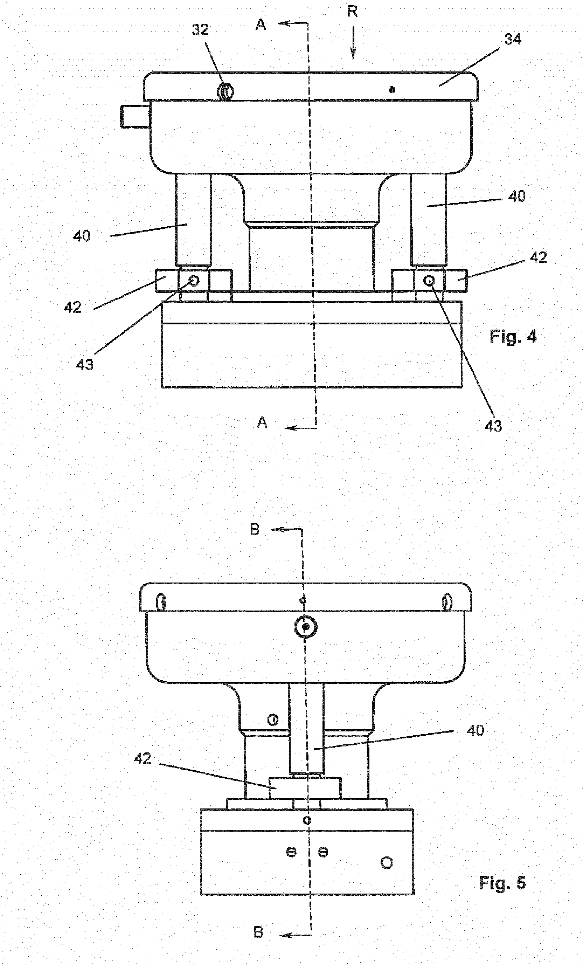

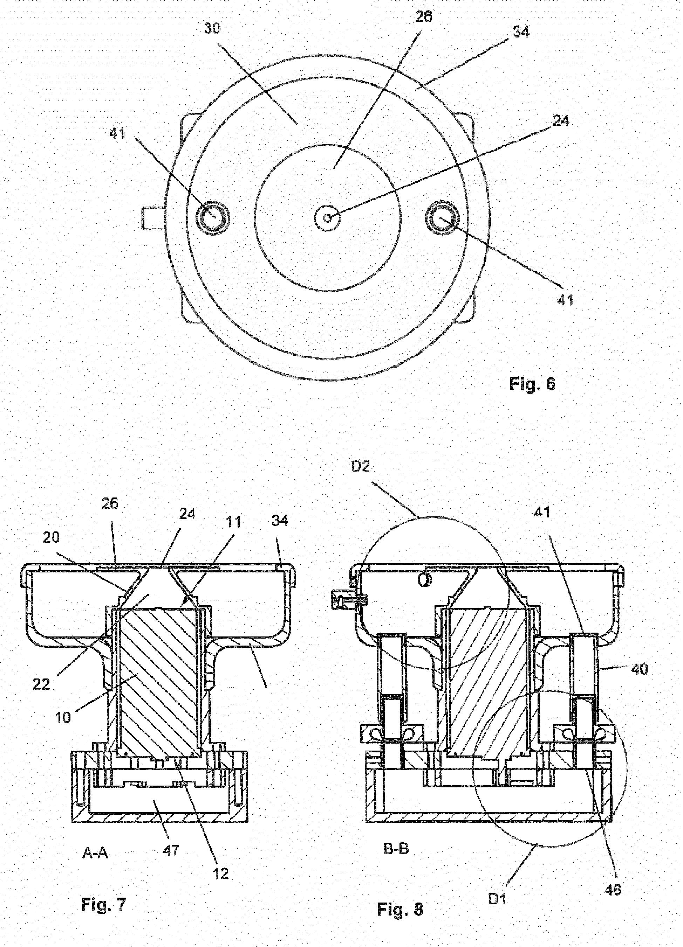

Die Figuren 1 bis 10 zeigen ein Ausführungsbeispiel einer erfindungsgemäßen Heizvorrichtung in Form eines Heizkopfes 5 in verschiedenen Ansichten und Darstellungen. Bei der Beschreibung dieses Heizkopfes 5 wird Bezug auf alle diese Figuren genommen. Es ist bevorzugt, die Heizvorrichtung in Form eines kompakten, in sich starren Heizkopfes 5 auszubilden, wie er hier dargestellt ist.

Wie dies oben erwähnt wurde, dient der Heizkopf 5 dazu, wenigstens einen Teil der Oberfläche einer Werkzeughälfte eines Spritzgusswerkzeuges zu erwärmen. Der Heizkopf 5 weist einen Lufterhitzer 8 auf, welcher aus einem hohlzylindrischen Mantel 9 und einem in diesem Mantel aufgenommenen elektrischen Heizelement 10 (welches man auch als Heizpatrone bezeichnen kann) besteht. Der Lufterhitzer 8 weist einen Eingang 11 und einen Ausgang 12 auf (diese fallen mit Eingang und Ausgang des Heizelementes 10 zusammen).

Es ist ein Düsenelement 20 vorgesehen, welches auf dem Mantel 9 des Lufterhitzers 8 angeordnet ist. Der Ausgang 12 des Lufterhitzers 8 mündet in den Innenraum 22 dieses Düsenelementes 20. Der Innenraum 22 ist im gezeigten Ausführungsbeispiel von einem konisch verlaufenden Mantel umgeben und endet an der Austrittsöffnung 24. Im gezeigten Ausführungsbeispiel, und dies ist bevorzugt, weist das Düsenelement 20 weiterhin eine Luftleitplatte 26 auf, in welcher sich die Austrittsöffnung 24 befindet. Im gezeigten Ausführungsbeispiel ist die Luftleitplatte 26 eben und senkrecht zur Längserstreckung des Lufterhitzers 8 ausgebildet. Im gezeigten Ausführungsbeispiel hat die Luftleitplatte 26 die Form einer Kreisscheibe.

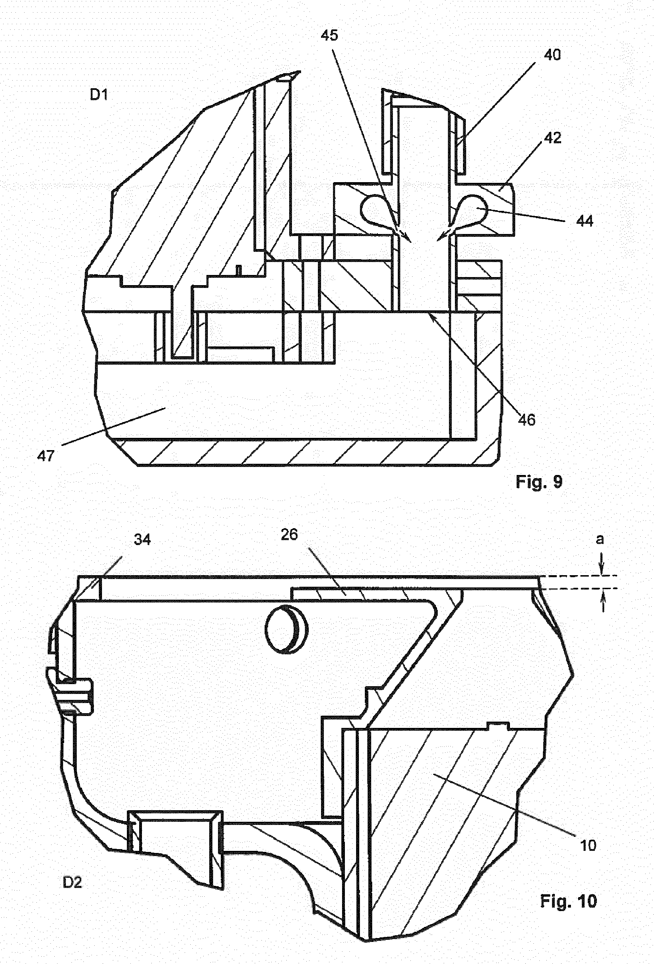

Der Lufterhitzer 8 trägt weiterhin eine Glocke 30. Sofern der Grundkörper dieser Glocke 30 aus einem harten Material wie beispielsweise Stahl besteht, ist es bevorzugt, dass die Glocke eine Kantenabdeckung 34 aus einem relativ weichen Material wie beispielsweise Aluminium aufweist, welche vom Grundkörper getragen wird. Der durch die Kantenabdeckung 34 definierte (hier kreisförmige) Rand der Glocke ist eben. Wie man der Figur 10 entnimmt, ist der durch die Kantenabdeckung 34 definierte Rand der Glocke von der Luftleitplatte 26 in Axialrichtung des Lufterhitzers 8 um den Abstand a, weicher vorzugsweise wenige Millimeter beträgt, beabstandet. Im Falle, dass keine Randabdeckung vorhanden ist, wäre dieser Abstand a durch die Position des Randes des Grundkörpers der Glocke selbst definiert. Hieraus ergibt sich, dass dann, wenn die Glocke 30 an einer ebenen Oberfläche anliegt, die Luftleitplatte 26 von dieser Fläche beabstandet ist und zwar um den Betrag a.

In der Glocke 30 sind - vorzugsweise in einem seitlichen Bereich - Entlüftungsöffnungen 32 vorgesehen. Grundsätzlich wäre es möglich, nur eine Entlüftungsöffnung 32 vorzusehen, häufig ist das Vorsehen von mehreren Entlüftungsöffnungen 32 jedoch bevorzugt. Die Funktion dieser Entlüftungsöffnung 32 wird später erläutert.

Schließlich weist der Heizkopf 5 eine Warmluft-Rückführeinrichtung auf. Diese dient dazu, einen Teil der aufgeheizten Luft, welche über den Lufterhitzer 8 in den von der Glocke 30 umschlossenen Raum eingebracht wird, zurückzuführen und wiederzuverwenden, so dass Energie eingespart wird. Im gezeigten Ausführungsbeispiel sind zwei solche Warmluft-Rückführeinrichtungen vorgesehen, das Vorsehen nur einer solchen Warmluft-Rückführeinrichtung oder von mehr als zwei solcher Warmluft-Rückführeinrichtungen wäre jedoch grundsätzlich auch möglich. Zur sprachlichen Vereinfachung wird im Folgenden auch nur auf eine der Warmluft-Rückführeinrichtung Bezug genommen.

Die Warmluft-Rückführeinrichtung erstreckt sich zwischen der Glocke 30 und einem eine Verbindungskammer 47 umschließenden Hohlköper 48. Der Eingang 11 des Heizelementes 10 grenzt an diese Verbindungskammer 47, so dass Luft aus dieser Verbindungskammer 47 in das Heizelement strömt, sofern entsprechende Druckverhältnisse herrschen. Die Warmluft-Rückführeinrichtung weist ein sich von der Glocke 30 erstreckendes Rohr 40 und eine Strahlpumpe 42 auf. Die Glocke 30 hat für das Rohr eine Durchbrechung, so dass ein Einlass 41 für die Warmluftrückführeinrichtung definiert ist. Das Rohr könnte sich auch bis ins Innere der Glocke 30 erstrecken, was im gezeigten Ausführungsbeispiel jedoch nicht der Fall ist. Der der Strahlpumpe 42 nachgeordnete Auslass 46 der Warmluft-Rückführeinrichtung mündet in die Verbindungskammer 47. Die Strahlpumpe ist ein starres Bauteil.

Der Aufbau der Strahlpumpe 42 wird nun, insbesondere mit Bezug auf die Figur 9, näher erläutert. Solche Strahlpumpen sind in der Technik bekannt und arbeiten im Allgemeinen nach dem Venturi- bzw. Bernoulli-Prinzip. Die Strahlpumpe 42 weist einen Druckgasanschluss 43 auf, welcher dazu geeignet ist, an die Standard-Druckluftversorgung einer Produktionsstätte angeschlossen zu werden. In der Regel ist zwischen die Druckluftversorgung und den Druckgasanschluss 43 ein Regelventil geschaltet, welches jedoch in den Zeichnungen nicht dargestellt ist. Das Grundprinzip dieser Strahlpumpe 42 liegt darin, dass ein gerichteter Druckgasstrahl erzeugt wird, welcher eine in Richtung des Auslasses gerichtete Bewegungskomponente aufweist. Um dies zu erreichen, können viele verschiedene im Stand der Technik bekannte Konstruktionen verwendet werden. Im gezeigten Ausführungsbeispiel ist eine mit dem Druckgasanschluss 43 in Verbindung stehende Ringleitung 44 mit einer ringförmigen Öffnung 45, welche die Austrittsdüse bildet, vorgesehen. Diese ringförmige Öffnung 45 ist in Axialrichtung zur Mitte der Ringleitung 44 in Richtung des Auslasses 46 versetzt, so dass sich eine durch die Pfeile angedeutete Strömungsrichtung ergibt. Nach den bekannten Prinzipien der Strömungsmechanik "reißt" die so gerichtete Druckluft Umgebungsluft mit, so dass am Auslass 46 ein Überdruck und am Einlass 41 ein Unterdruck entsteht. Das heißt, dass die Warumluftrückführeinrichtung Warmluft aus der Glocke 30 einsaugt und ein Gemisch aus dieser eingesaugten Warmluft und zugeführter Druckluft (Pressluft) in die Verbindungskammer 47 einpresst, von wo sie aufgrund des herrschenden Überdruckes durch das Heizelement 10 des Lufterhitzers 10 in die Glock 30 strömt.

Während des Aufheizens einer Oberfläche (insbesondere der Oberfläche eines Spritzgusswerkzeuges) liegt der Rand der Glocke (welcher insbesondere durch die Kantenabdeckung 34 gebildet sein kann) auf der Oberfläche auf, so dass ein geschlossener Raum gebildet wird. Da dem System laufend Frischluft in Form von Druckluft (oder grundsätzlich auch einem anderen Druckgas) zugeführt wird, muss eine Entlüftung vorgesehen sein, da sonst der Gesamtdruck des Systems ständig zunehmen würde. Hierfür dienen die oben erwähnten Entlüftungsöffnungen 32.

Man sieht, dass die Warmluftrückführeinrichtung 40 vollständig ohne bewegliche Teile ausgeführt sein kann und somit wartungsfrei arbeitet. Weiterhin kann sie auch hohen Temperaturen widerstehen, was es möglich macht, den Heizkopf 5 sehr kompakt auszubilden.

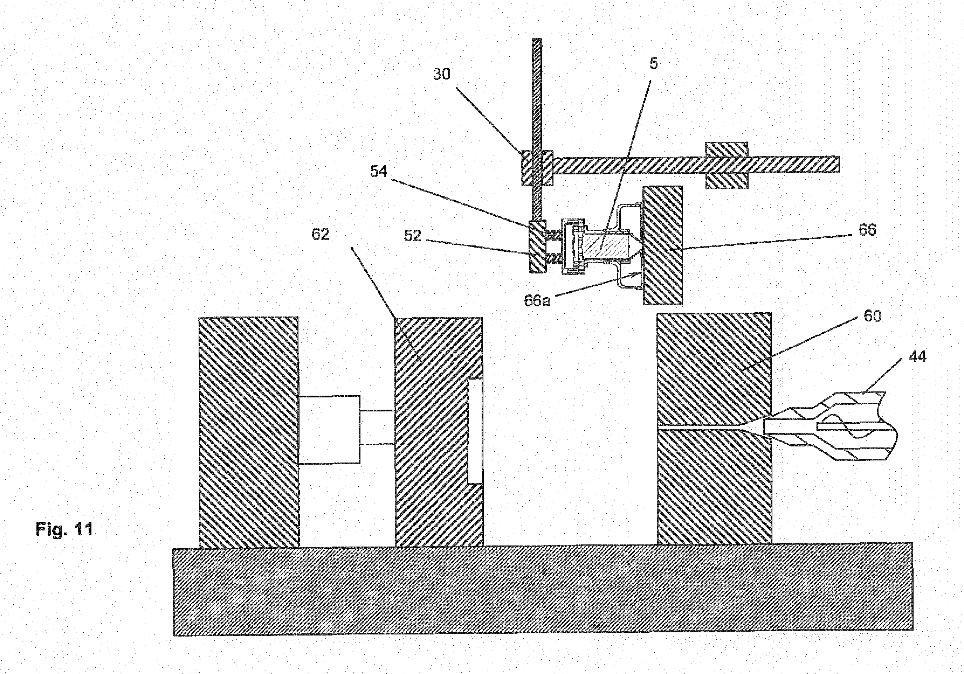

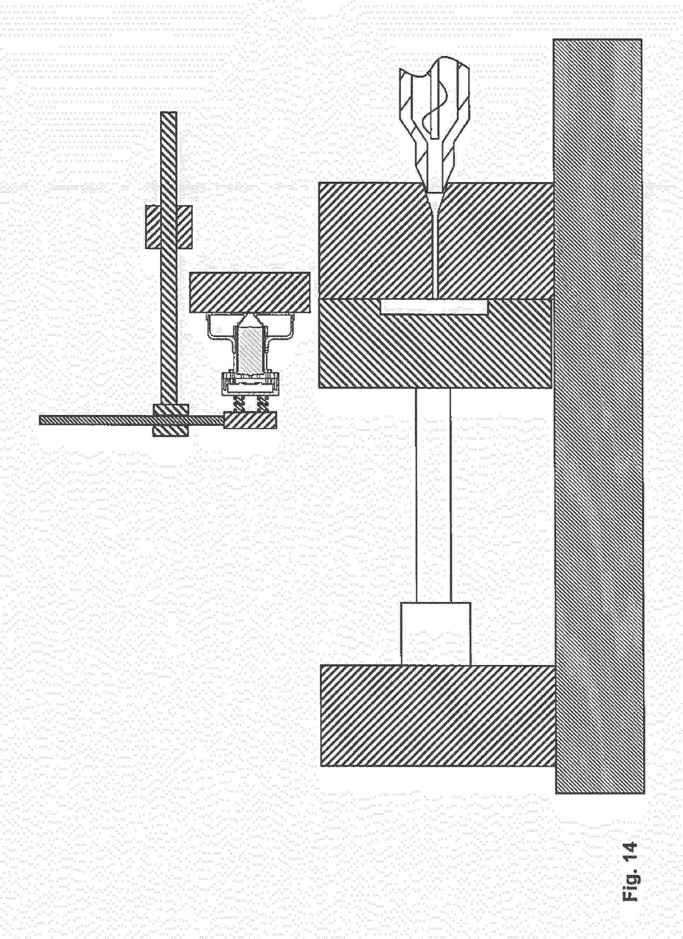

Mit Bezug auf die Figuren 11 bis 14 wird nun die bevorzugte Art der bestimmungsgemäßen Verwendung der eben beschriebenen Heizvorrichtung beschrieben. Es ist an dieser Stelle noch zu erwähnen, dass grundsätzlich auch anders aufgebaute Heizvorrichtungen (welche keine Strahlpumpe verwenden) entsprechend betrieben werden könnten, wobei jedoch einen Kombination aus erfindungsgemäßer Heizvorrichtung und dem nun beschriebenen erfindungsgemäßen Verfahren zu ihrer Verwendung besonders bevorzugt ist.

Die Figur 11 zeigt stark schematisiert einen Querschnitt durch eine Spritzgussmaschine mit einer stationären Werkzeughälfte 60 und einer beweglichen Werkzeughälfte 62. Eine Plastifiziereinheit 64 dient dazu, verflüssigten Kunststoff in eine Öffnung der stationären Werkzeughälfte einzuspritzen.

Es ist eine Heizvorrichtung, nämlich ein Heizkopf 5 vorgesehen, welcher dazu dient, wenigstens einen Teil der Oberfläche der stationären Werkzeughälfte 60 vor einem Spritzvorgang zu erwärmen. Es wäre natürlich ebenso möglich, den Heizkopf 5 derart vorzusehen, dass er einen Teil der Oberfläche der beweglichen Werkzeughälfte 62 erwärmt. Im gezeigten Ausführungsbespiel ist der Heizkopf 5 wie zuvor beschrieben ausgebildet. Um den Heizkopf 5 zwischen die Werkzeughälften 60, 62 verfahren zu können und um den Rand der Glocke 30 in Anlage mit der Oberfläche der stationären Werkzeughälfte 60 bringen zu können, ist ein Roboter 50 vorgesehen. Ein solcher Roboter 50 wird oft auch als "Handling" bezeichnet. Der Roboter 50 trägt eine Verbindungsplatte 52, welche über eine Federeinheit 54 den Heizkopf 5 trägt. Es ist weiterhin ein außerhalb des Bereichs der beiden Werkzeughälften 60, 62 angeordnetes Element 66 mit einer Anlagefläche 66a vorgesehen. Das Element 66 besteht vorzugsweise aus einem wärmebeständigen Material mit schlechter Wärmeleitfähigkeit und/oder großer Wärmekapazität. Das Element 66 kann somit beispielsweise ein Schamotteelement sein.

Die Figur 1 zeigt einen Zustand, in dem das Werkzeug gerade geöffnet wurde, beispielsweise weil das zuvor gespritzte Teil soeben entnommen wird (nicht dargestellt). In diesem Zustand liegt die Glocke 30 an der Anlagefläche 66a an und der Heizkopf 5 befindet sich in einem Vorbereitungszustand, in welchem das Heizelement 10 mit reduzierter Leistung arbeitet. In der Regel ist hierbei auch die Druckluftzufuhr an die Strahlpumpe 42 heruntergeregelt. Aufgrund der Anlage der Glocke 30 an der Anlagefläche 66a geht jedoch keine Heizenergie unnötig verloren.

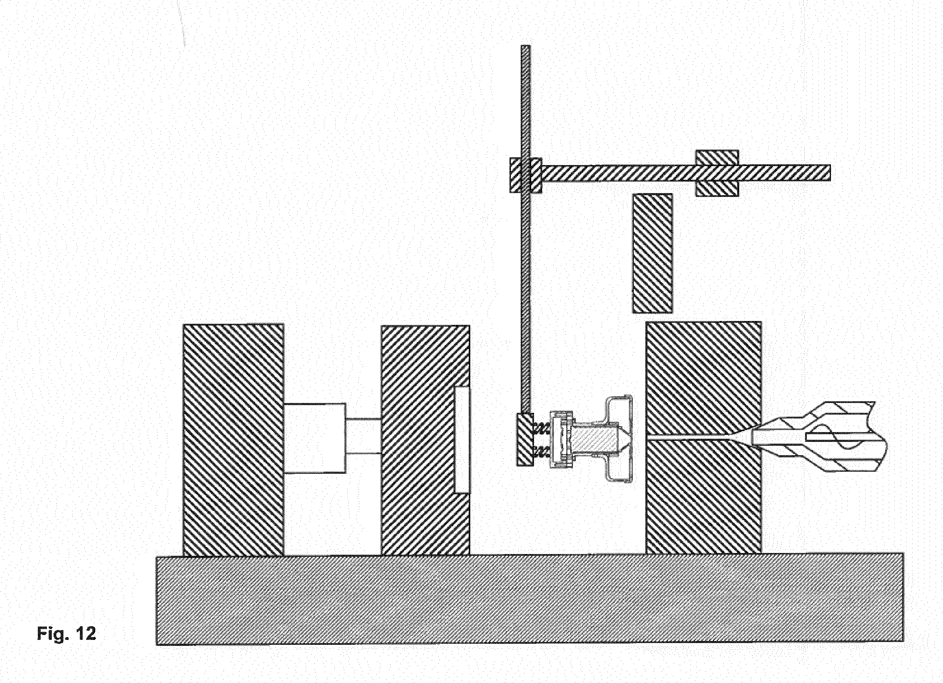

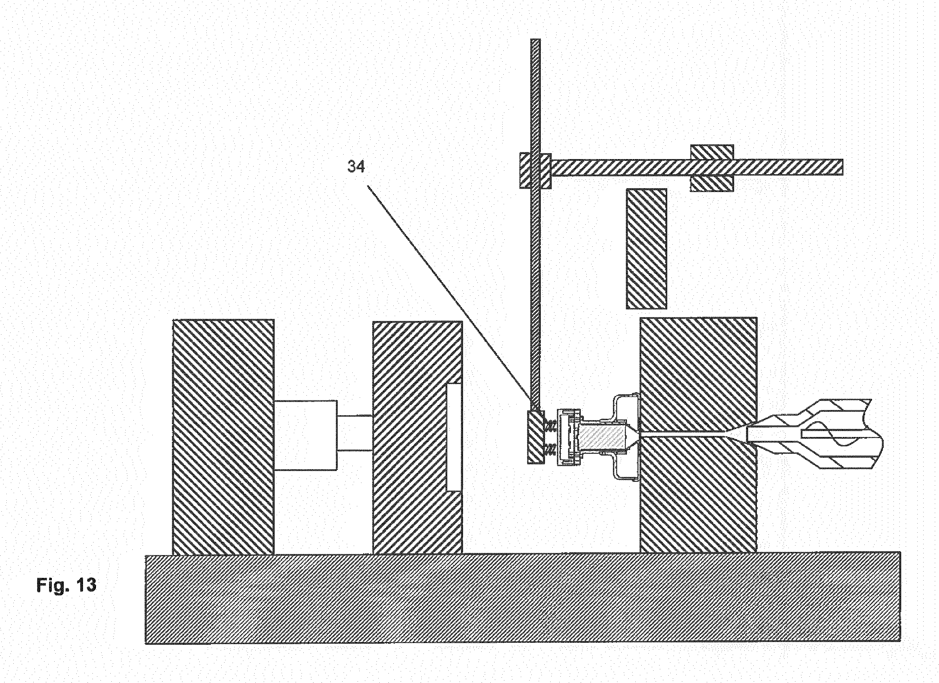

Im nachfolgenden Verfahrensschritt (Figur 12) wird der Heizkopf 5 zwischen die beiden Werkzeughälften 60, 62 verfahren und dann (Figur 13) wird der Rand der Glocke in Anlage mit der Oberfläche der stationären Werkzeughälfte 60 gebracht. Die Federeinheit 54 dient hierbei als Kraftbegrenzer. In diesem Zustand wird die Leistung des Heizkopfes 5 in der Regel nach oben geregelt, das heißt die Leistungsaufnahme der Heizelementes 10 steigt und die Menge der zugeführten Druckluft wird erhöht. Durch den aus der Austrittsöffnung 24 austretenden Heißluftstrom wird ein Abschnitt der Oberfläche der Werkzeughälfte 60 erwärmt, insbesondere im Bereich der Luftleitplatte 26, in welchem lediglich ein schmaler Spalt zwischen dieser Luftleitplatte 26 und der Werkzeugoberfläche besteht. Nach Abschluss dieses Erwärmungsvorgangs wird der Heizkopf aus dem Bereich zwischen den beiden Werkzeughälften herausgefahren.

Das Werkzeug wird nun geschlossen und der Einspritzvorgang beginnt. Während dieser Zeit befindet sich der Heizkopf 5 wieder in der in Figur 11 gezeigten Position. Das heißt, dass die Glocke 30 an der Anlagefläche 66a anliegt. Nach Abschluss des Einspritzvorganges können Teile der Werkzeughälften 60, 62 mittels Kühlkanälen gekühlt werden, wie dies im Stand der Technik bekannt ist. Dies in den Zeichnungen nicht dargestellt.

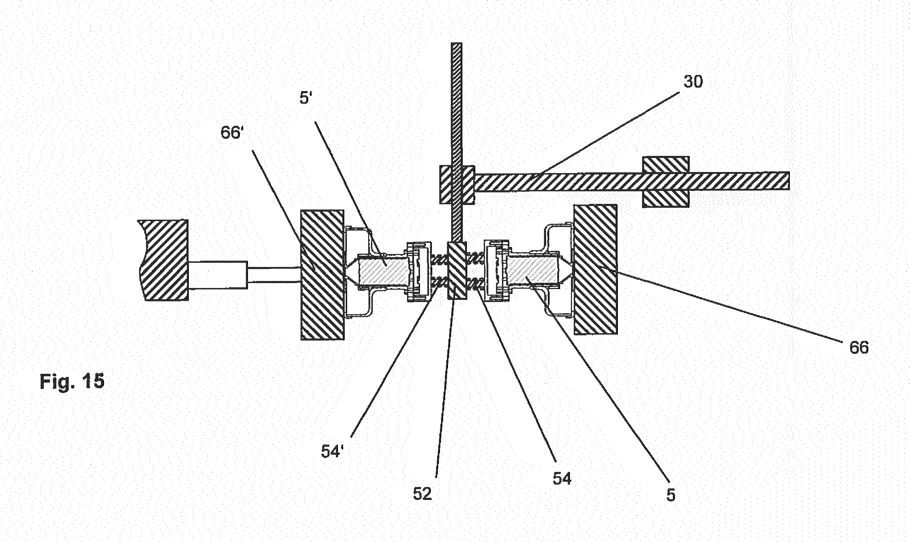

Wie man der Figur 15 entnimmt, ist es auch möglich, mittels eines Roboters 50 zwei Heizköpfe 5, 5' in den Bereich zwischen zwei Werkzeughälften zu fahren. Um die Roboter-Heizkopf-Baugruppe möglichst einfach zu halten, kann hierbei die Beweglichkeit der beweglichen Werkzeughälfte ausgenutzt werden, um beide Glocken 30 in Anlage mit einer Werkzeugoberfläche bringen zu können. In diesem Fall sollte auch eines der beiden Elemente 66, 66' mit Anlagefläche 66a, 66a' beweglich ausgeführt sein, um beide Heizköpfe 5, 5' in einen Zustand bringen zu können, wie er dem der Figur 11 entspricht. Alternativ hierzu wäre es jedoch auch möglich, wenigstens einen der beiden Heizköpfe in Schließrichtung des Werkzeugs aktiv beweglich an der Verbindungsplatte 52 anzuordnen, beispielsweise mittels wenigstens einer pneumatischen Kolben-Zylinder-Einheit,

Die ideale Form der Glocke 30 und die ideale Form des Düsenelementes 20 können je nach dem zu erzeugenden Spritzgussteil sehr unterschiedlich sein. Es ist deshalb bevorzugt, diese Elemente zumindest abschnittsweise aus einem wärmebeständigen Material in einem 3D-Druckverfahren herzustellen, so dass mit einem aus Hohlkörper 48 und Lufterhitzer 8 bestehenden Basiselement viele verschiedene auf das Problem angepasste Heizköpfte gebildet werden können. Hierbei ist es insbesondere bevorzugt, dass Glocke und Düse eine Glocken-Düseneinheit 70 bilden, welche auf einfache Weise am Lufterhitzer 8 befestigt werden kann, wobei das Befestigen beispielsweise durch ein einfaches Aufstecken und Arretieren erfolgen kann.

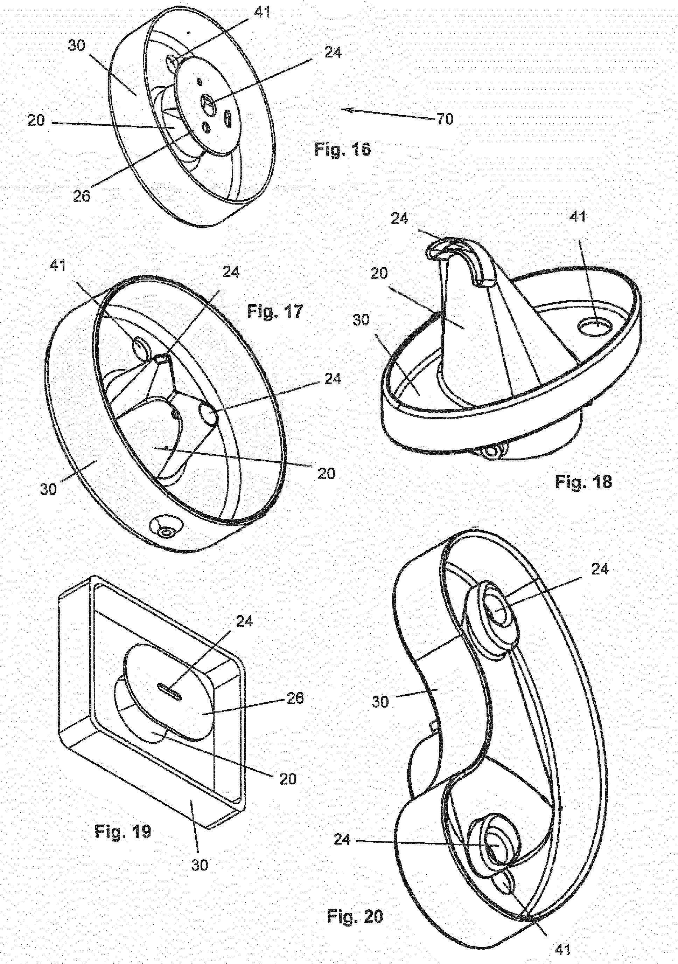

Die Figuren 16 bis 20 zeigen Beispiele solcher Glocken-Düsen-Einheiten 70. Die Glocken-Düsen-Einheit 70 der Figur 16 ist im Wesentlichen so ausgebildet, dass sich nach Anordnung derselben am Lufterhitzer 8 ein Einheitskopf 5 ergibt, wie er in den Figuren 1 bis 10 dargestellt ist. Gegebenenfalls könnte noch eine Kantenabdeckung am Grundkörper der Glocke angeordnet werden.

Das Ausführungsbeispiel der Figur 17 weist zwei Austrittsöffnungen 24 auf, ebenso das Ausführungsbeispiel der Figur 20. Wie man beispielsweise der Figur 18 entnimmt, ist es in manchen Anwendungsfällen auch möglich, dass das Düsenelement 20 tiefer in die entsprechende Werkzeughälfte hineinragt als die Glocke 30.

### Bezugszeichenliste

- 5,5': Heizkopf
- 8: Lufterhitzer
- 9: Mantel
- 10: Heizelement
- 11: Eingang
- 12: Ausgang
- 20: Düsenelement
- 22: Innenraum
- 24: Austrittsöffnung
- 26: Luftleitplatte
- 30: Glocke
- 32: Entlüftungsöffnung
- 34: Kantenabdeckung
- 40: Rohr der Warmluft-Rückführeinrichtung
- 41: Einlass der Warmluft-Rückführeinrichtung
- 42: Strahlpumpe
- 43: Druckgas-Anschluss
- 44: Ringleitung mit Austrittsdüse
- 45: Ringförmige Öffnung
- 46: Auslass der ersten Warmluft-Rückführeinrichtung
- 47: Verbindungskammer
- 48: Heizkörper
- 50: Roboter
- 52: Verbindungsplatte
- 54, 54': Federeinheit
- 60: stationäre Werkzeughälfte
- 62: bewegliche Werkzeughälfte
- 64: Plastifiziereinheit
- 66, 66': Element mit Anlagefläche
- 66a, 66a': Anlagefläche
- 70: Glocken-Düsen-Einheit

## Patentansprüche

1. Heizvorrichtung zur Erwärmung wenigstens eines Teils der Oberfläche wenigstens einer Werkzeughälfte (60, 62) eines Spritzgusswerkzeugs mit wenigstens einem einen Eingang (11) und einen Ausgang (12) aufweisenden Lufterhitzer (8),
wenigstens einer einen Einlass (41) und einen Auslass (46) aufweisenden Warmluft-Rückführeinrichtung, deren Auslass (46) mit dem Eingang (11) des Lufterhitzers (8) in Strömungsverbindung steht,
**dadurch gekennzeichnet, dass** die Warmluft-Rückführeinrichtung zwischen ihrem Einlass (41) und ihrem Auslass (46) eine Strahlpumpe (42) mit einem Druckgas-Anschluss (43) derart aufweist, dass diese bei Betrieb Luft am Einlass (41) ansaugt und ein Gemisch aus der angesaugten Luft und über den Druckgas-Anschluss zugeführtem Gas am Auslass (46) ausstößt.

2. Heizvorrichtung zur Erwärmung nach Anspruch 1,
**dadurch gekennzeichnet, dass** Lufterhitzer (8) und Strahlpumpe (42) starr miteinander gekoppelt sind und Teil eines zwischen die geöffneten Werkzeughälften (60, 62) einfahrbaren Heizkopfes (5, 5') bilden.

3. Heizvorrichtung nach Anspruch 2, **dadurch gekennzeichnet, dass** der Heizkopf (5, 5') weiterhin eine Glocke (30) aufweist, wobei die Glocke (30) eine Durchbrechung aufweist, welche den Einlass (41) der Warmluft-Rückführeinrichtung bildet oder durch welchen ein Teil der Warmluft-Rückführeinrichtung derart durchtritt, dass der Einlass (41) der Warmluft-Rückführeinrichtung in dem von der Glocke (30) umschlossenen Bereichs positioniert ist.

4. Heizvorrichtung nach Anspruch 3, **dadurch gekennzeichnet, dass** die Glocke (30) weiterhin wenigstens eine Entlüftungsöffnung (32) aufweist.

5. Heizvorrichtung nach einem der vorangehenden Ansprüche, **dadurch gekennzeichnet, dass** dem wenigstens einen Lufterhitzer (8) ein Düsenelement (20) nachgeordnet ist, durch welches aus dem Lufterhitzer (8) ausströmende Luft strömt.

6. Heizvorrichtung nach Anspruch 5, **dadurch gekennzeichnet, dass** das Düsenelement (20) eine Luftleitplatte (26) aufweist.

7. Heizvorrichtung nach Anspruch 3 oder Anspruch 4 und einem der Ansprüche 5 oder 6, **dadurch gekennzeichnet, dass** die Glocke (30) und das Düsenelement (20) eine wechselbar am Lufterhitzer (8) anordenbare Glocken-Düsen-Einheit (70) bilden.

8. Heizvorrichtung nach Anspruch 7, **dadurch gekennzeichnet, dass** das die Glocken-Düsen-Einheit (70) einstückig ausgebildet ist.

9. Heizvorrichtung nach Anspruch 7 oder Anspruch 8, **dadurch gekennzeichnet, dass** die Glocken-Düsen-Einheit (70) zumindest teilweise im 3D-Druckver-fahren hergestellt ist.

10. Peripheriegerät für eine Spritzgussmaschine mit
einer Heizvorrichtung zur Erwärmung wenigstens eines Teils der Oberfläche wenigstens einer Werkzeughälfte (60, 62) eines Spritzgusswerkzeugs nach einem der vorangehenden Ansprüche 3, 4, 7-9 und
einem Roboter (50), an welchen die Heizvorrichtung derart angekoppelt ist, dass der Roboter (50) die Glocke (30) in Anlage mit einer Oberfläche einer der beiden Oberflächen und in eine Position außerhalb des Bereichs zwischen den beiden Werkzeughälften (60, 62) bringen kann,
wobei das Peripheriegerät weiterhin ein Element (66) mit einer Anlagefläche (66a), mit der die Glocke (30) mittels des Roboters (50) in Anlage bringbar ist, aufweist.

11. Peripheriegerät nach Anspruch 10 , **dadurch gekennzeichnet, dass** die Heizvorrichtung mittels einer Federeinheit (54, 54') mit einer Verbindungsplatte (52) verbunden ist, welche an den Roboter (50) gekoppelt ist.

12. Peripheriegerät nach einem der Ansprüche 10 oder 11, **dadurch gekennzeichnet, dass** zwei entgegengesetzt orientierte Heizvorrichtungen mit dem Roboter (50) gekoppelt sind, so dass Teile der Oberflächen beider Werkzeughälften (60, 62) erwärmt werden können.

13. Verfahren zur Steuerung eines Peripheriegeräts nach einem der Ansprüche 10 bis 12, wobei die Heizvorrichtung derart angesteuert wird, dass sie dann, wenn die Glocke (30) in Anlage mit der Anlagefläche (66a) ist, eine geringere Heizleistung liefert als wenn die Glocke (30) in Anlage mit einer Oberfläche einer Werkzeughälfte (60, 62) ist.

## Claims

1. Heating device for heating at least a part of the surface of at least one mould half (60, 62) of an injection moulding mould, with at least one air heater (8) having an inlet (11) and an outlet (12),
at least one hot air recycling device, having an inlet (41) and an outlet (46), of which the outlet (46) is in flow connection with the inlet (11) of the air heater (8),
**characterised in that** the hot air recycling device comprises, between its inlet (41) and its outlet (46), a jet pump (42) with a compressed gas connection (43), in such a way that, during operation, this aspirates air in at the inlet (41) and at the outlet (46) emits a mixture of the aspirated air and of the gas introduced via the compressed gas connection.

2. Heating device for heating according to claim 1,
**characterised in that** the air heater (8) and jet pump (42) are rigidly coupled to one another and form part of a heating head (5, 5') which can be moved in between the opened mould (60, 62).

3. Heating device according to claim 2, **characterised in that** the heating head (5, 5') further comprises a cone (30), wherein the cone (30) exhibits a passage aperture which forms the inlet (41) of the hot air recycling device, or through which a part of the hot air recycling device passes, in such a way that the inlet (41) of the hot air recycling device is positioned in the region surrounded by the cone (30).

4. Heating device according to claim 3, **characterised in that** the cone (30) further exhibits at least one venting aperture (32).

5. Heating device according to any one of the preceding claims, **characterised in that** a nozzle element (20) is arranged downstream of the at least one air heater (8), through which air flows which is flowing from the air heater (8).

6. Heating device according to claim 5, **characterised in that** the nozzle element (20) comprises an air baffle plate (26).

7. Heating device according to claim 3 or claim 4 and one of claims 5 or 6,
**characterised in that** the cone (30) and the nozzle element (20) form a cone-nozzle unit (70) which can be arranged in an exchangeable manner at the air heater (8).

8. Heating device according to claim 7, **characterised in that** the cone-nozzle unit (70) is configured as being of one piece.

9. Heating device according to claim 7 or claim 8, **characterised in that** the cone-nozzle unit (70) is produced at least partially in the 3D printing process.

10. Peripheral device for an injection moulding machine for heating at least a part of the surface of at least one mould half (60, 62) of an injection moulding mould according to any one of the preceding claims 3, 4, 7-9 ,
and
a robot (50), to which the heating device is coupled in such a way that the robot (50) can bring the cone (30) with one surface of the two surfaces and into a position outside the region between the two mould halves (60, 62),
wherein the peripheral device further comprises an element (66) with a contact surface (66a), with which the cone (30) can be brought into contact by means of the robot (50).

11. Peripheral device according to claim 10, **characterised in that** the heating device is coupled by means of a spring unit (54, 54') to a connecting plate (52), which is coupled to the robot (50).

12. Peripheral device according to one of claims 10 or 11, **characterised in that** two heating devices, oriented so as to oppose one another are coupled to the robot (50), such that parts of the surfaces of both mould halves (60, 62) can be heated.

13. Method for controlling a peripheral device according to any one of claims 10 to 12, wherein the heating device is actuated in such that, when the cone (30) is in contact with the contact surface (66a), it provides a lower heating capacity than when the cone (30) is in contact with a surface of one mould half (60, 62).

## Revendications

1. Dispositif de chauffage pour chauffer au moins une partie de la surface d'au moins une moitié d'outil (60, 62) d'un outil de moulage par injection avec au moins un réchauffeur d'air (8) ayant une entrée (11) et une sortie (12),
au moins un moyen de recirculation d'air chaud comportant une entrée (41) et une sortie (46 ), dont la sortie (46) est en liaison d'écoulement avec l'entrée (11) du réchauffeur d'air (8),
**caractérisé en ce que** le moyen de recirculation d'air chaud comporte une pompe à jet (42) entre son entrée (41) et sa sortie (46) ) avec un raccord de gaz sous pression (43) de telle sorte que lors du fonctionnement elle aspire de l'air à l'entrée (41) et éjecte un mélange d'air aspiré et de gaz fourni via le raccord de gaz sous pression à la sortie (46).

2. Dispositif de chauffage pour le chauffage selon la revendication 1,
**caractérisé en ce que** le réchauffeur d'air (8) et la pompe à jet (42) sont couplés rigidement l'un à l'autre et font partie d'une tête de chauffage (5, 5') pouvant être insérée entre les moitiés d'outil ouvertes (60, 62).

3. Dispositif de chauffage selon la revendication 2, **caractérisé en ce que** la tête de chauffage (5, 5 ') comprend en outre une cloche (30), la cloche (30) ayant une ouverture formant l'entrée (41) du moyen de recirculation d'air chaud ou à travers laquelle une partie du moyen de recirculation d'air chaud passe de sorte que l'entrée (41) du moyen de recirculation d'air chaud est positionnée dans la zone entourée par la cloche (30).

4. Dispositif de chauffage selon la revendication 3, **caractérisé en ce que** la cloche (30) comprend en outre au moins une ouverture d'évent (32).

5. Dispositif de chauffage selon l'une des revendications précédentes,
**caractérisé en ce que** l'au moins un réchauffeur d'air (8) est suivi d'un élément de buse (20) à travers lequel s'écoule de l'air sortant du réchauffeur d'air (8).

6. Dispositif de chauffage selon la revendication 5, **caractérisé en ce que** l'élément de buse (20) comporte une plaque de guidage d'air (26).

7. Dispositif de chauffage selon la revendication 3 ou la revendication 4 et l'une des revendications 5 ou 6, **caractérisé en ce que** la cloche (30) et l'élément de buse (20) forment une unité de buse à cloche (70) pouvant être agencée de manière interchangeable sur le réchauffeur d'air (8).

8. Dispositif de chauffage selon la revendication 7, **caractérisé en ce que** l'unité de buse à cloche (70) est formée d'une seule pièce.

9. Dispositif de chauffage selon la revendication 7 ou la revendication 8, **caractérisé en ce que** l'unité de buse à cloche (70) est au moins partiellement fabriquée par le procédé d'impression 3D.

10. Dispositif périphérique pour une machine de moulage par injection avec un dispositif de chauffage pour chauffer au moins une partie de la surface d'au moins une moitié d'outil (60, 62) d'un outil de moulage par injection selon l'une des revendications précédentes 3, 4, 7-9 et un robot (50) auquel le dispositif de chauffage est couplé de telle sorte que le robot (50) puisse mettre en contact la cloche (30) avec une surface de l'une des deux surfaces et dans une position en dehors de la zone entre les deux moitiés d'outil (60, 62),
le dispositif périphérique comprenant en outre un élément (66) avec une surface de contact (66a) avec laquelle la cloche (30) peut être mise en contact au moyen du robot (50).

11. Dispositif périphérique selon la revendication 10, **caractérisé en ce que** le dispositif de chauffage est connecté au moyen d'une unité à ressort (54, 54') à une plaque de connexion (52) couplée au robot (50).

12. Dispositif périphérique selon l'une des revendications 10 ou 11, **caractérisé en ce que** deux dispositifs de chauffage à orientation opposée sont couplés au robot (50), de sorte que des parties des surfaces des deux moitiés d'outil (60, 62) puissent être chauffées.

13. Procédé de commande d'un dispositif périphérique selon l'une quelconque des revendications 10 à 12, dans lequel le dispositif de chauffage est commandé de telle sorte que lorsque la cloche (30) est en contact avec la surface de contact (66a), il délivre une puissance de chauffage plus faible que lorsque la cloche (30) est en contact avec une surface d'une moitié d'outil (60, 62).
